# EUROPEAN PATENT APPLICATION

(11) **EP 1 637 051 A1**
(43) Date of publication of application: **22.03.2006**
(21) Application number: 04425691.5
(22) Date of filing: 16.09.2004
(51) Int. Cl.: A43B 13/24, B29D 31/50, A43B 21/08

(54) **Anti-slip sole for footwear, particularly for safety shoe, and relative production method**

(71) Applicant: Calzaturificio Orion S.p.A., 35023 Bagnoli Di Sopra (PD) (IT)
(72) Inventor: Meneghin, Maria Antonietta, 35020 Terrassa Padovana (IT)
(74) Representative: Petruzziello, Aldo

(57) **Abstract**

An anti-slip sole for footwear, particularly for safety shoes, is described, which comprises a heel insert (1) made of a first elastomer and a sole (4) made of a second elastomer which partially incorporates said heel insert (1) so that it remains exposed in the heel area of said sole.

The hardness of the first elastomer of the heel insert (1) is less than that of the second elastomer of the sole (4).

A method for producing said anti-slip sole by moulding or by pouring of an elastomer is also described.

## Description

The present invention refers to the field of footwear and in particular to the safety shoes.

As is known, the soles of the safety shoes must ensure an adequate resistance to slipping, commonly known as grip. The soles of the safety shoes are generally made by moulding using suitable elastomeric materials.

However, as is known to the art, very soft materials have an excellent grip, but they are subject to abrasion and to a rapid wear, resulting in a too short average life of the shoe. An effort has therefore been made to reach a compromise between the grip of the sole of the shoe and the hardness of the material which guarantees a longer lasting shoe.

The current safety standards require a measurement of the slipping of the shoe, which is carried out by resting the tread of the sole on a horizontal ceramic surface wet with glycerine. The shoe is then dragged lengthwise and crosswise on this horizontal surface.

From experimental tests it has emerged that the greatest risk of slipping of the shoe occur in the first step of putting the sole on the ground, which generally takes place on the heel of the shoe, corresponding to the heel of the user's foot. For this reason, stricter slipping tests must be carried out in the region of the heel of the shoe. As a result, to pass these slipping tests, soles that are too soft and are subject to abrasion and to a rapid use must be produced.

Object of the present invention is to overcome the drawbacks of the prior art, providing an anti-slip sole for footwear and in particular for safety shoes that ensures a strong grip and at the same time is hard enough to prevent abrasion and wear.

Another object of the present invention is to provide such a sole that is versatile, inexpensive and simple to make.

These objects are achieved in accordance with the invention with the sole and the production method for a sole whose characteristics are listed in appended independent claims 1 and 7, respectively.

Advantageous embodiments of the invention are apparent from the dependent claims.

The anti-slip sole for footwear, particularly for safety shoes according to the invention comprises:
- a heel insert, made of a first elastomer; and
- a sole, made of a second elastomer, which partially incorporates said heel insert so that it remains exposed in the heel area of the shoe.

The first elastomer of the heel insert has a lower hardness compared with the second elastomer of the sole. In this manner, a greater grip in the heel area of the sole and a greater resistance to abrasion in the tread area of the sole are ensured.

Further characteristics of the invention will be made clearer by the detailed description that follows, referring to a purely exemplifying and therefore non-limiting embodiment, illustrated in the appended drawings, in which:
- Figure 1 is a bottom plan view of a heel insert for a shoe sole according to the invention;
- Figure 2 is a top plan view of the heel insert of Figure 1;
- Figure 3 is a top plan view of a mould for moulding a shoe sole according to the invention;
- Figure 4 is a top perspective view of the mould of Figure 3 in which the heel insert of Figures 1 and 2 has been inserted;
- Figure 5 is a top perspective view like Figure 4, illustrating a shoe sole disposed on the mould of Figure 4, at the end of the moulding process;
- Figure 6 is a bottom plan view of the shoe sole obtained with the mould of Figure 5;
- Figure 7 is a side elevational view of a shoe comprising the sole of Figure 6, worn on the user foot, during the first step of putting the heel of the shoe on the ground; and
- Figure 8 is a side elevational view like Figure 7, but illustrating the shoe while the tread of the sole is being put on the ground.

The anti-slip sole for shoes according to the invention and the production method thereof are described with the aid of the figures.

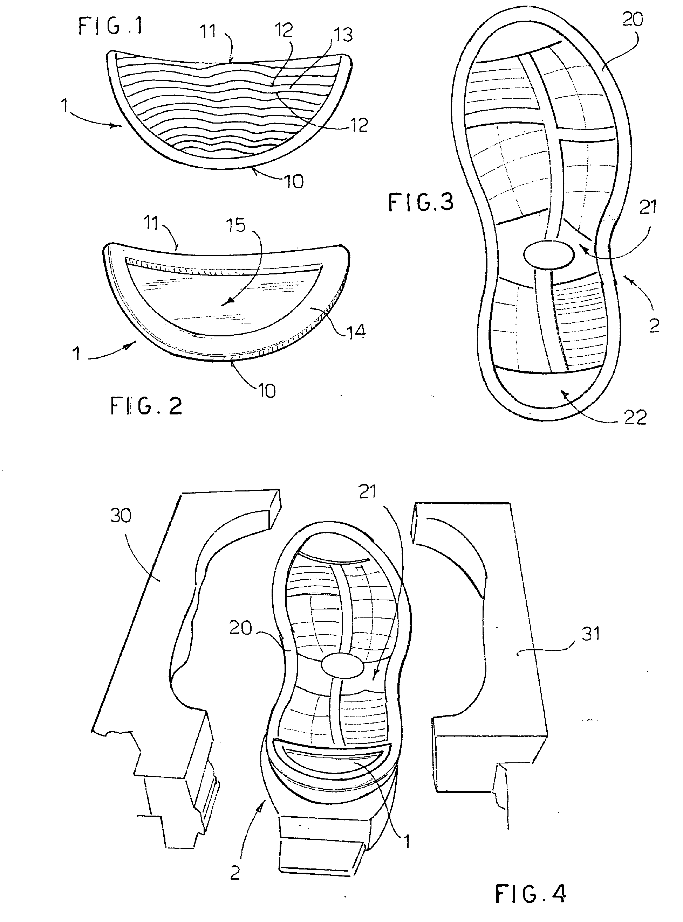

With reference to Figures 1 e 2, firstly a heel insert 1, having a profile 10 shaped as an arc of a circle cut from a substantially straight transverse cord 11, is made. With reference to Figure 1, a plurality of undulated grooves 12, extending transversally like the cord 11 and arranged parallel to each other, are formed in the bottom surface (that destined to face the ground) of the heel insert 1. The undulated grooves 12 define between them a plurality of undulated ridges 13.

With reference to Figure 2, a raised peripheral rim 14, which defines inside it a recessed seat 15, is formed in the upper surface (that destined to face the heel of the foot) of the heel insert 1.

The heel 1 is made of a soft elastomeric material that ensures good characteristics of resistance to slipping and therefore a strong grip on the ground. The heel 1 is preferably made by injection moulding of a plastic material such as polyurethane (PU) or thermoplastic polyurethane (TPU) or can be made by pouring rubber. The elastomer used to produce the heel insert 1 has hardness no greater than 50 shA.

As shown in Figure 3, in order to make the sole of the shoe, a mould 2 is used which has a raised peripheral profile 20 that defines a recessed seat 21 of the sole that substantially reproduces the plant of a foot and therefore the configuration of a sole for footwear. A heel seat 22 designed to receive the heel insert 1 is defined in the sole seat 21 of the mould 2, to coincide with the heel of the foot.

As shown in Figure 4, the heel insert 1 is put in the heel seat 22 manually or automatically. The mould 2 is positioned between two mobile mould halves 30 and 31 disposed laterally with respect to the mould 2. In this manner, when the mould halves 30 and 31 move towards the mould 2 they define a cavity above the sole site 21 of the mould 2.

When the mould is closed, a plastic material, such as for example PU (polyurethane) or TPU (thermoplastic polyurethane), is injected or rubber is poured into said cavity defined by the two lateral mould halves 30 and 31 and by the central mould 2 to form the sole. As shown in Figure 4, the injected or poured elastomer is distributed on the sole seat 21 of the mould 2 and on the top surface of the heel insert 1, forming the sole 4 of the shoe.

In this manner the heel insert 1 is partially incorporated into the sole 4 and the top and front walls of the heel insert 1 are bound integrally to the material of the sole 4. The hardness of the elastomer used for the sole 4 is greater than that of the elastomer used for the heel insert 1. For example, the hardness of the elastomer of the sole 4 is greater than 50 shA.

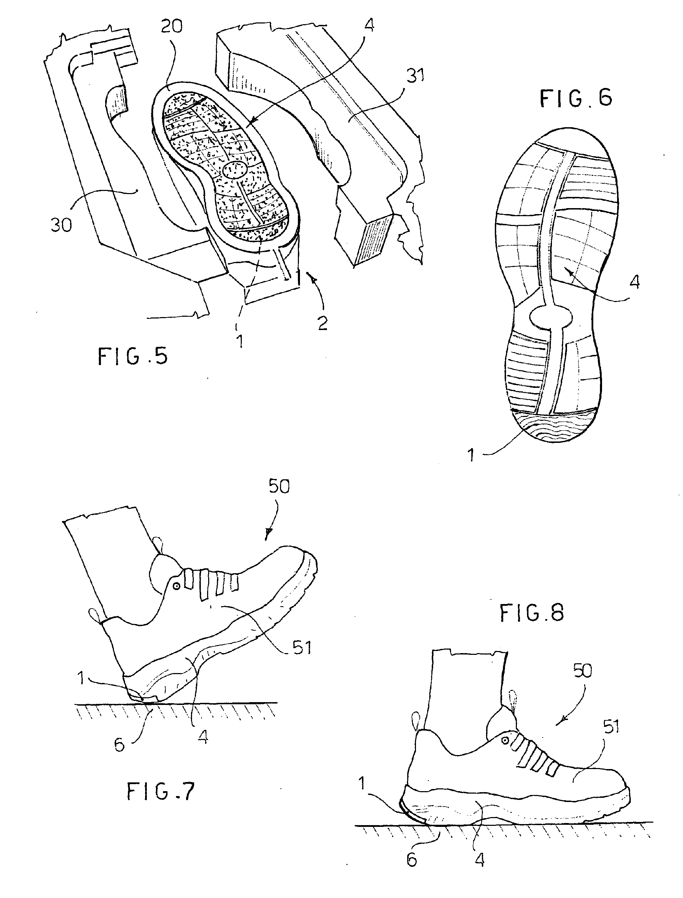

As shown in Figure 6, the heel insert 1 remains exposed in the bottom surface of the sole 4 and is disposed in the rear portion of the sole 4.

As shown in Figure 7 the sole 4, with the heel insert 1, is applied to an upper 51 to make a safety shoe 50. When the shoe 50 is worn by a user, during the first step of putting the foot on the ground, the first part coming into contact with the ground 6 is the heel insert 1, which is made of softer material than the sole 4 and thus ensures a better grip.

As shown in Figure 8, on the other hand, when the sole 4 of the shoe is placed with its tread on the ground 6, the heel insert 1 is less stressed with respect to the remainder of the tread of the sole 4, because it is positioned inclined and slightly raised with respect to the supporting surface 6. As a result, even if the heel insert 1 is made of a material softer than that of the sole 4, it undergoes less abrasion because it is less stressed when the tread of the sole 4 is put on the ground.

## Claims

1. An anti-slip sole for footwear, particularly for safety shoes, **characterised in that** it comprises:
- a heel insert (1) made of a first elastomer, and
- a sole (4) made of a second elastomer that partially incorporates said heel insert (1) so that it remains exposed in the heel area of said sole (4),
wherein the hardness of said first elastomer of the heel insert (1) is less than that of said second elastomer of the sole (4).

2. A sole according to claim 1, **characterised in that** the hardness of said first elastomer of the heel insert (1) is no greater than 50 shA.

3. A sole according to claim 1 or 2, **characterised in that** said heel insert (1) is made of a plastic or thermoplastic material - such as PU (polyurethane) or TPU (thermoplastic polyurethane) - by injection moulding.

4. A sole according to claim 1 or 2, **characterised in that** said heel insert (1) is made by pouring rubber.

5. A sole according to any one of the preceding claims, **characterised in that** said sole (4) is made of a plastic or thermoplastic material - such as PU (polyurethane) or TPU (thermoplastic polyurethane) - by injection moulding and **in that** said heel insert (1) is inserted in the mould (2) before moulding.

6. A sole according to any one of claims 1 to 4, **characterised in that** said sole (4) is made by pouring rubber and **in that** said heel insert (1) is inserted into the mould (2) before pouring the rubber.

7. A method for the production of an anti-slip sole for footwear, particularly for safety shoes, comprising the following steps:
- formation of a first heel insert (1) of a first elastomer,
- insertion of said heel insert (1) in a mould (2), and
- injection/pouring of a second elastomer into said mould (2) to form a sole (4), which partially incorporates said heel insert (1) so that it remains exposed in the heel area (1) of the sole (4),
wherein the hardness of said first elastomer of the heel insert (1) is less than that of said second elastomer of the sole (4).

8. A method according to claim 7, **characterised in that** the hardness of said first elastomer of the heel insert (1) is no greater than 50 shA.

9. A method according to claim 7 or 8, **characterised in that** said heel insert (1) is made of a plastic or thermoplastic material - such as PU (polyurethane) or TPU (thermoplastic polyurethane) - by injection moulding.

10. A method according to claim 7 or 8, **characterised in that** said heel insert (1) is made by pouring rubber.

11. A method according to any one of claims 7 to 10, **characterised in that** said sole (4) is made of a plastic or thermoplastic material - such as PU (polyurethane) or TPU (thermoplastic polyurethane) - by injection moulding and **in that** said heel insert (1) is inserted in the mould before moulding.

12. A method according to any one of claims 7 to 10, **characterised in that** said sole (4) is made by pouring rubber and **in that** said heel insert (1) is inserted in the mould (2) before pouring the rubber.
